# EUROPEAN PATENT SPECIFICATION

(11) **EP 2 890 184 B1**
(45) Date of publication and mention of the grant of the patent: **07.12.2016**
(21) Application number: 12886803.1
(22) Date of filing: 18.10.2012
(51) Int. Cl.: H04W 36/14

(54) **METHOD, APPARATUS AND SYSTEM FOR PROCESSING DATA-FIELD SERVICE**
VERFAHREN, VORRICHTUNG UND SYSTEM ZUR VERARBEITUNG EINES DATENFELDDIENSTES
PROCÉDÉ, APPAREIL ET SYSTÈME DE TRAITEMENT DE SERVICE DU DOMAINE DES DONNÉES

(43) Date of publication of application: 01.07.2015
(73) Proprietor: Huawei Technologies Co., Ltd., Longgang District Shenzhen, Guangdong 518129 (CN)
(72) Inventor: QI, Caixia, Shenzhen Guangdong 518129 (CN); YU, Yijun, Shenzhen Guangdong 518129 (CN)
(74) Representative: Pfenning, Meinig & Partner mbB
(86) International application number: PCT/CN2012/083150
(87) International publication number: WO 2014/059647

(56) References cited:
- EP-A1- 2 317 797
- WO-A1-2006/048697
- WO-A1-2011/144140
- WO-A2-2008/115125
- CN-A- 101 212 810
- CN-A- 101 400 090
- CN-A- 101 835 246
- CN-A- 101 848 515

## Description

### TECHNICAL FIELD

The present invention relates to the communications field, and in particular, to a method, an apparatus, and a system for processing a data domain service.

### BACKGROUND

With development of mobile communication networks, service types supported by a second generation mobile communications technology (Second Generation, 2G) network using a GSM/EDGE radio access network (GSM EDGE Radio Access Network, GERAN) as an access network increase continuously, and the number of users also increases continuously. In an early stage of the development, the 2G network using the GERAN network as the access network supports only basic services such as a voice and an SMS message, and the development of the mobile communications networks enables the 2G network using the GERAN network as the access network to support not only the basic services, but also support data domain services such as video on demand, file downloading, webpage browsing, and instant messaging.

In the prior art, because an increasing number of services of different types are introduced, usage of air interface resources is increasingly high. On some 2G networks using a GERAN network as an access network, when network congestion is caused because some services greatly occupy air interface resources, some other services cannot be used normally because they cannot acquire air interface resources, which affects user experience. A 2G network using a GERAN network as an access network uses a dedicated channel allocation manner, which accelerates consumption of air interface resources, and compared with other types of networks, a resource shortage problem is more prominent. Because of the dedicated channel allocation manner, the resource shortage problem may also occur on an evolved packet switched network (Evolved Data packet System, EPS) network using a GERAN network as an access network.

More attention is paid to bearer of data domain services during implementation of a third generation mobile communications technology (The third Generation Telecommunication, 3G) network using a universal terrestrial radio access network (Universal Terrestrial Radio Access Network, UTRAN) as an access network, or an EPS network using a UTRAN or an evolved universal terrestrial radio access network (Evolved Universal Terrestrial Radio Access Network, E-UTRAN) as an access network, and compared with a 2G network or an EPS network using a GERAN as an access network, there is a relatively high data domain service bearer capability.

Therefore, currently, a solution is urgently needed to save air interface resources on an EPS network or a 2G network that uses a GERAN network as an access network, so as to mitigate a resource shortage problem.

WO 2008/115125 A2 discusses methods and devices forwarding data packets during handover in a packet-switched wireless communications system, such as a 3GPP Long-Term Evolution/System Architecture Evolution system. In an exemplary method, a source base station node determines that handover of at least one radio bearer for a served user terminal to a target base station node is imminent. The source base station node classifies a plurality of data packets into two or more data flow classifications according to a transmission status for each data packet, a service requirement for each data packet, or both and selectively forwards one or more of the data packets to the target base station node based on the data flow classification for each data packet.

### SUMMARY

Embodiments of the present invention provide a method, an apparatus, and a system for processing a data domain service, which mitigate a resource shortage problem of an EPS network or a 2G network that uses a GERAN as an access network.

A first aspect of the present invention provides a method for determining a data domain service, including:
receiving, by a source access network element, a user-plane data packet of a data domain service of a user terminal sent by a source mobility management network element, where the user-plane data packet includes a handover instruction or service type information; and
sending a handover request to the source mobility management network element according to the handover instruction or the service type information, so as to hand over the data domain service of the user terminal to a target network.

With reference to the first aspect, in a possible implementation manner, the handover instruction is obtained by the source mobility management network element by making a handover decision according to a service type of the user-plane data packet and user terminal information.

With reference to the first aspect and the foregoing possible implementation manner, in another possible implementation manner, before the sending a handover request to the source mobility management network element, the method further includes:
making the handover decision according to the service type of the user-plane data packet and the user terminal information, where the user terminal information includes a situation of covering the user terminal by the target network and a capability of the user terminal to support the target network; and
if the service type of the user-plane data packet is a data domain service that needs to be handed over, and the user terminal supports the target network and is within a coverage scope of the target network, a result of the handover decision is sending the handover request to the source mobility management network element, so as to hand over a data domain service, which needs to be handed over, of the user terminal to the target network.

With reference to the first aspect and the foregoing possible implementation manners, in another possible implementation manner, the data domain service that needs to be handed over is a preconfigured to-be-handed-over data domain service, and/or a data domain service determined according to a resource occupation situation of the data domain service.

With reference to the first aspect and the foregoing possible implementation manners, in another possible implementation manner, before the sending a handover request to the source mobility management network element, the method further includes:
determining, according to a measurement report sent by the user terminal, the situation of covering the user terminal by the target network; and
determining, according to radio access capability information of the user terminal during initial access, the capability of the user terminal to support the target network.

With reference to the first aspect and the foregoing possible implementation manners, in another possible implementation manner, the source mobility management network element determines, according to system configuration information, a situation of covering the user terminal by the target network.

With reference to the first aspect and the foregoing possible implementation manners, in another possible implementation manner, the handover instruction includes an explicit instruction or an implicit instruction, where:
the explicit instruction is used to instruct not to initiate handover, or instruct to initiate handover.

With reference to the first aspect and the foregoing possible implementation manners, in another possible implementation manner, the making the handover decision according to the service type of the user-plane data packet and the user terminal information includes:
making the handover decision according to operator configuration information, the service type of the user-plane data packet, and the user terminal information, where the operator configuration information is used to configure a specific to-be-handed-over user terminal; and
if the service type of the user-plane data packet is a data domain service that needs to be handed over, the user terminal supports the target network and is within the coverage scope of the target network, and the user terminal is a specific to-be-handed-over user terminal configured by an operator, handing over the data domain service, which needs to be handed over, of the user terminal to the target network.

A second aspect of the present invention provides a source access network apparatus for determining a data domain service, including:
a receiver, configured to receive a user-plane data packet of a data domain service of a user terminal sent by a source mobility management network element, where the user-plane data packet includes a handover instruction or service type information; and
a sender, configured to send a handover request to the source mobility management network element according to the handover instruction or service type information received by the receiver, so as to hand over the data domain service of the user terminal to a target network.

With reference to the second aspect, in a possible implementation manner, the handover instruction is obtained by the source mobility management network element by making a handover decision according to a service type of the user-plane data packet and user terminal information.

With reference to the second aspect and the foregoing possible implementation manner, in another possible implementation manner, the apparatus for processing a data domain service further includes:
a processor, configured to: before the sender sends the handover request to the source mobility management network element, make the handover decision according to the service type of the user-plane data packet received by the receiver and the user terminal information, where the user terminal information includes a situation of covering the user terminal by the target network and a capability of the user terminal to support the target network; and
the sender is further configured to: when the service type of the user-plane data packet is a data domain service that needs to be handed over, and the user terminal supports the target network and is within a coverage scope of the target network, send the handover request to the source mobility management network element, so as to hand over a data domain service, which needs to be handed over, of the user terminal to the target network.

With reference to the second aspect and the foregoing possible implementation manners, in another possible implementation manner:
the receiver is further configured to: before the sender sends the handover request to the source mobility management network element, receive a measurement report sent by the user terminal;
the processor is further configured to determine, according to the measurement report received by the receiver, the situation of covering the user terminal by the target network;
the receiver is further configured to receive radio access capability information of the user terminal during initial access; and
the processor is further configured to determine, according to the radio access capability information received by the receiver, the capability of the user terminal to support the target network.

With reference to the second aspect and the foregoing possible implementation manners, in another possible implementation manner, the handover instruction includes an explicit instruction or an implicit instruction, where:
the explicit instruction is used to instruct not to initiate handover, or instruct to initiate handover.

With reference to the second aspect and the foregoing possible implementation manners, in another possible implementation manner, the apparatus for processing a data domain service further includes:
a memory, configured to store preconfigured operator configuration information, where:
   the processor is further configured to make the handover decision according to the operator configuration information stored in the memory, the service type of the user-plane data packet received by the receiver, and the user terminal information, where the operator configuration information is used to configure a specific to-be-handed-over user terminal; and
   the sender is further configured to: when the service type of the user-plane data packet received by the receiver is a data domain service that needs to be handed over, the user terminal supports the target network and is within the coverage scope of the target network, and the user terminal is a specific to-be-handed-over user terminal configured by an operator, hand over the data domain service, which needs to be handed over, of the user terminal to the target network.

A third aspect of the present invention provides a system for determining a data domain service, which includes an source access network apparatus for processing a data domain service, a source mobility management network element, and a target mobility management network element, where:
the apparatus for processing a data domain service is configured to: receive a user-plane data packet of a data domain service of a user terminal sent by the source mobility management network element, where the user-plane data packet includes a handover instruction or service type information; and send a handover request to the source mobility management network element according to the handover instruction or the service type information, so as to hand over the data domain service of the user terminal to a target network;
the source mobility management network element is configured to: send the user-plane data packet comprising a handover instruction of service type information to the apparatus for processing a data domain service, receive the handover request sent by the apparatus for processing a data domain service, and forward the handover request to the target mobility management network element; and
the target mobility management network element is configured to: receive the handover request sent by the source mobility management network element, and start a subsequent handover process to hand over the data domain service, which needs to be handed over, of the user terminal to a target network.

According to the method, the apparatus, and the system for determining a data domain service provided by the present invention, the handover request is sent to the source mobility management network element according to the handover instruction or the service type information included in the user-plane data packet, so that the data domain service of the user terminal is handed over to the target network. In the prior art, a data domain service occupies air interface resources and therefore, network congestion is caused; and compared with this, a data domain service of a user terminal is handed over to a target network, and a corresponding data domain service is provided to the user terminal by the target network, which not only ensures a service of a user in terms of a data domain service, but also saves air interface resources of a source network, and mitigates a resource shortage problem of the source network.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for determining a data domain service according to Embodiment 1 of the present invention;
FIG. 2 is a flowchart of a method for determining a data domain service according to Embodiment 2 of the present invention;
FIG. 3 is a flowchart of a method for determining a data domain service according to Embodiment 3 of the present invention;
FIG. 4 is a schematic composition diagram of an apparatus for determining a data domain service according to Embodiment 4 of the present invention;
FIG. 5 is a schematic composition diagram of another apparatus for determining a data domain service according to Embodiment 4 of the present invention;
FIG. 6 is a schematic composition diagram of a system for determining a data domain service according to Embodiment 4 of the present invention; and
FIG. 7 is a schematic composition diagram of an apparatus for determining a data domain service according to Embodiment 5 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

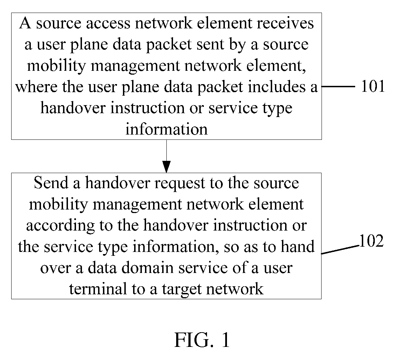

This embodiment of the present invention provides a method for processing a data domain service. As shown in FIG. 1, the method may include the following steps:
101. A source access network element receives a user-plane data packet sent by a source mobility management network element, where the user-plane data packet includes a handover instruction or service type information.

When receiving the user-plane data packet, sent by a network, of a user terminal, the source mobility management network element sends the user-plane data packet including the handover instruction or the service type information to the source access network element.

102. Send a handover request to the source mobility management network element according to the handover instruction or the service type information, so as to hand over a data domain service of a user terminal to a target network.

After receiving the user-plane data packet that includes the handover instruction or the service type information and is sent by the source mobility management network element, the source access network element sends the handover request to the source mobility management network element according to the handover instruction or the service type information. Specifically, the handover request is sent to the source mobility management network element according to the handover instruction included in the user-plane data packet; or a handover decision is made according to a service type of the user-plane data packet and user terminal information, and when the service type is a data domain service that needs to be handed over, and the user terminal supports the target network and is within a coverage scope of the target network, the handover request is sent to the source mobility management network element. The data domain service that needs to be handed over is a preconfigured to-be-handed-over data domain service, and/or a data domain service determined according to a resource occupation situation of the data domain service. For example, the user terminal has data domain services such as video communication and instant messaging; however, an instant messaging service occupies too many resources in a source network; in this case, the source access network element sends a handover request to the source mobility management network element only when the user terminal performs the instant messaging service.

The target network may be a network with a strong data domain service bearer capability, such as a UTRAN or an E-UTRAN, but not a GERAN network of a same type.

It should be noted that, for a specific description of some steps of the method for determining a data domain service provided by this embodiment of the present invention, reference may be made to corresponding content in Embodiments 2, 3, 4, and 5, and details are not repeatedly described herein in this embodiment of the present invention.

According to the method for processing a data domain service provided by the present invention, the handover request is sent to the source mobility management network element according to the handover instruction or the service type information included in the user-plane data packet, so that the data domain service of the user terminal is handed over to the target network. In the prior art, a data domain service occupies air interface resources and therefore, network congestion is caused; and compared with this, a data domain service of a user terminal is handed over to a target network, and a corresponding data domain service is provided to the user terminal by the target network, which not only ensures a service of a user in terms of a data domain service, but also saves air interface resources of a source network, and mitigates a resource shortage problem of the source network.

### Embodiment 2

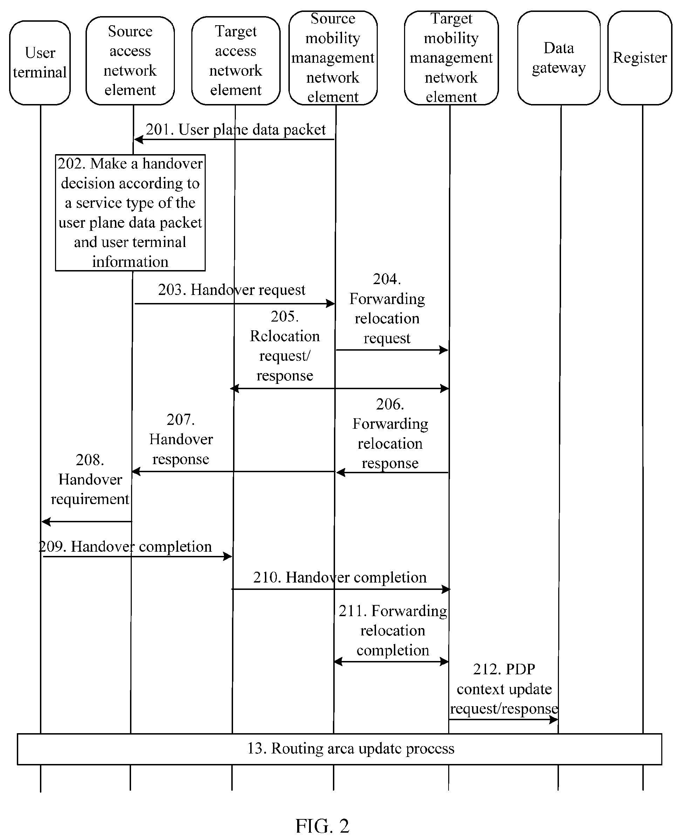

This embodiment of the present invention provides a method for processing a data domain service. As shown in FIG. 2, in an application scenario, a data domain service, which needs to be handed over, of a user terminal is handed over from a 2G network using a GERAN network as an access network to a 3G network using a UTRAN network as an access network, where the method may include the following steps:
201. A source access network element receives a user-plane data packet sent by a source mobility management network element.

The source access network element receives a user-plane data packet that is of the user terminal and sent by the source mobility management network element. The user-plane data packet includes corresponding service type information, and the source access network element learns a service type corresponding to the user-plane data packet by using the service type information, for example, the service type may be a basic service such as voice communication or an SMS message, or may also be a data domain service such as video on demand, file downloading, webpage browsing, or instant messaging.

The source access network element may learn the service type corresponding to the user-plane data packet by using a service type indication carried in a BSS GPRS Protocol (BSS GPRS Protocol, BSSGP) header of the user-plane data packet, or a differentiated services code point (Differentiated Services Code Point, DSCP) field carried in an Internet Protocol (Internet Protocol, IP) header.

202. The source access network element makes a handover decision according to a service type of the user-plane data packet and user terminal information, where the user terminal information includes a situation of covering the user terminal by a target network, and a capability of the user terminal to support the target network. If the service type of the user-plane data packet is a data domain service that needs to be handed over, and the user terminal supports the target network and is within a coverage scope of the target network, step 203 is executed; if the service type of the user-plane data packet is not a data domain service that needs to be handed over, or the user terminal does not support the target network, or the user terminal is not covered by the target network, a data domain service of the user terminal is performed on a source network. The data domain service that needs to be handed over is a preconfigured to-be-handed-over data domain service, and/or a data domain service determined according to a resource occupation situation of the data domain service.

The source access network element learns, according to a measurement report sent by the user terminal, the situation of covering the user terminal by the target network, and learns, according to radio access capability information of the user terminal during initial access, the capability of the user terminal to support the target network. For example, the source access network element learns that the user terminal is within a service scope of a 3G network according to a measurement report sent by the user terminal, and learns that the user terminal has a 3G radio capability according to a radio access network capability that the user terminal has during initial access.

Further, the source access network element may also initiate, according to operator configuration information, a handover process for a specific user terminal, where the operator configuration information may be: a user agreeing to handover by signing a contract, a very important person (Very Important Person, VIP) user, and the like. The configuration information may be acquired from operation and maintenance network element or another network element (which may be referred to as a parameter delivering network element in this embodiment of the present invention), and the parameter delivering network element may be a network element such as a home location register (Home Location Register, HLR), a home subscriber server (Home Subscriber Server, HSS), a mobility management network element, a data gateway, or a policy and charging rules function (Policy and Charging Rules Function, PCRF).

203. Send a handover request to the source mobility management network element.

If the source access network element determines that the service type of the user-plane data packet is a data domain service that needs to be handed over, and that the user terminal supports the target network and is within the coverage scope of the target network, the source access network element sends the handover request to the source mobility management network element, so as to hand over the data domain service, which needs to be handed over, of the user terminal to the target network. Information such as a node identifier of a target access network is carried in the handover request, and is used to instruct the source mobility management network element to determine, according to node information of the target access network, a target network that is handed over to, where the target network may be obtained by selecting according to the measurement report of the user terminal.

Further, reference information for decision making in step 202 may also include the operator configuration information, where the operator configuration information is used to configure a specific to-be-handed-over user terminal. If the source network element determines that the service type of the user-plane data packet is a data domain service that needs to be handed over, that the user terminal supports the target network and is within the coverage scope of the target network, and that the user terminal is a specific to-be-handed-over user terminal configured by an operator, the source access network element sends the handover request to the source mobility management network element.

To help a person skilled in the art understand a handover process of handing over a data domain service, which needs to be handed over, of a user terminal from a source network to a target network, the handover process is specifically described in the following steps 204 to 213. Specifically, an access network of the source network is a GERAN network, a corresponding source access network element is a base station system (Based Station System, BBS), and the source mobility management network element is a serving GPRS support node (Serving GPRS Support Node, SGSN). An access network of the target network is a UTRAN network, a corresponding target access network element is a radio network subsystem (Radio Network Subsystem, RNS), and a target mobility management network element is an SGSN. A data gateway is a gateway GPRS support node (Gateway GPRS Support Node, GGSN). An HLR is responsible for management and maintenance of home user subscription information.

204. The source mobility management network element sends a forwarding relocation request message to a target mobility management network element, where the message carries information such as a user identifier and a user context.

205. The target mobility management network element sends a relocation request message to a target access network element, and the target access network element returns a relocation response message.

This message interaction is used to forward, to the target access network element, radio bearer information and the like sent by the source access network element, so as to instruct the target access network element to establish a corresponding radio bearer.

206. The target mobility management network element returns a forwarding relocation response message to the source mobility management network element.

207. The source mobility management network element sends a handover response message to the source access network element.

The handover response message is used to indicate that corresponding preparations such as resource allocation are already completed on the target network.

208. The source access network element sends a handover requirement to the user terminal, where the handover requirement is used to instruct the user terminal to be handed over to the target network.

209. The user terminal sends a handover completion message to the target access network element.

210. The target access network element sends a handover completion message to the target mobility management network element.

211. The target mobility management network element sends a forwarding relocation completion message to the source mobility management network element, and the source mobility management network element returns a forwarding relocation acknowledgment message.

212. The target mobility management network element sends a Packet Data Protocol (Packet Data Protocol, PDP) context updating request message to a data gateway, and the data gateway returns a corresponding response message.

The PDP context updating request message is used to update a control-plane path and a user-plane path of the user terminal.

213. The user terminal initiates a routing area update process.

The area update process is used to: update registration information on the HLR, acquire subscription information of the user terminal, and reallocate a temporary user identity.

It should be noted that, operations, such as access network context forwarding, and establishment and deletion of a user-plane data packet forwarding tunnel, may also be performed in the handover process, which is not described in detail herein in this embodiment of the present invention.

It should be noted that, in this embodiment, the source access network element and the target access network element may also be managed by a same mobility management network element. The foregoing process is a handover process in a scenario in which a mobility management network element changes. When the source mobility management network element and the target mobility management network element are a same mobility management network element, a difference from the foregoing handover process lies in that: the foregoing steps 204, 206, and 211 are not executed, and among other steps, the steps executed by the target mobility management network element are all executed by the source mobility management network element.

The foregoing embodiment is described by using handover from a 2G GERAN network to a 3G UTRAN network as an example. This embodiment may also be applied to handover from a 2G GERAN network to an EPS UTRAN network, handover from a 2G GERAN network to an EPS E-UTRAN network, handover from an EPS GERAN network to a 3G UTRAN network, handover from an EPS GERAN network to an EPS UTRAN network, handover from an EPS GERAN network to an EPS E-UTRAN network, and the like.

A handover process on networks that is different from handover from the 2G GERAN network to the 3G UTRAN network is basically the same as the handover process described in this embodiment, where a main difference lies in the following:
If the source network is an EPS network, and the target network is a 3G network. the target access network element is a UTRAN, the data gateway is a node into which a PDN-GW and a GGSN are combined, and there is further a serving gateway between the source mobility management network element and the data gateway. After handover, the source mobility management network element may send a session deletion request message to delete user information on the serving gateway.

If the source network is a 2G network, and the target network is an EPS network, the target access network element is a UTRAN/E-UTRAN, the target mobility management network element is an SGSN or an MME, the data gateway is a node into which a PDN-GW and a GGSN are combined, and there is further a serving gateway between the target mobility management network element and the data gateway.

After step 204, the target mobility management network element selects the serving gateway, and sends a session establishment request message to the serving gateway, and the serving gateway returns a corresponding response message. Step 212 is changed into: the target mobility management network element sends a bearer modification request message to the serving gateway, the serving gateway sends the bearer modification request message to the data gateway, the data gateway returns a bearer modification response message to the serving gateway, and the serving gateway returns the bearer modification response message to the target mobility management network element. A signaling path and a user-plane path of the user terminal are established between the target mobility management network element, the serving gateway (Serving Gateway, S-GW) and the data gateway, where the target mobility management network element and the serving gateway are on the target network.

If the source network is an EPS network, and the target network is an EPS network, the target access network element is a UTRAN/E-UTRAN, the target mobility management network element is an SGSN or an MME, the data gateway is a PDN-GW, there is further a serving gateway between the source mobility management network element and the data gateway, and there is also a serving gateway between the target mobility management network element and the data gateway.

When serving gateways of the source network and the target network are the same in a handover process, step 212 is changed into: the target mobility management network element sends a bearer modification request message to the serving gateway, the serving gateway returns a bearer modification response message, so as to hand over a signaling path and a user-plane path of the user terminal from the source network to the target network. If serving gateways of the source network and the target network are different in a handover process, after step 204, the target mobility management network element selects a target serving gateway, and sends a session establishment request message to the target serving gateway, and the target serving gateway returns a corresponding response message. Step 212 is changed into: the target mobility management network element sends a bearer modification request message to the target serving gateway, the target serving gateway sends the bearer modification request message to the data gateway, the data gateway returns a bearer modification response message to the target serving gateway, and the target serving gateway returns the bearer modification response message to the target mobility management network element. A signaling path and a user-plane path of the user terminal are established between the target mobility management network element, the serving gateway and the data gateway which the target mobility management network element and the serving gateway are on the target network. After handover, the source mobility management network element sends a session deletion request message to delete user information on the source serving gateway.

It should be noted that, when this embodiment is specifically applied, a decision making rule may be configured on the source access network element, for example, a user terminal using a specific service needs to be handed over to another network, and in this way, a service occupying relatively more resources on a network may be handed over to another type of network with relatively light load, which reduces load of the source network.

It should be noted that, for specific description of some steps of the method for processing a data domain service provided by this embodiment of the present invention, reference may be made to corresponding content in Embodiments 1, 3, 4, and 5, and details are not repeatedly described herein in this embodiment of the present invention.

According to the method for processing a data domain service provided by the present invention, the source access network element sends the handover request to the source mobility management network element according to the service type of the user-plane data packet and the user terminal information, so that the data domain service, which needs to be handed over, of the user terminal is handed over to the target network. In the prior art, a data domain service occupies air interface resources and therefore, network congestion is caused; and compared with this, a data domain service of a user terminal is handed over to a target network, and a corresponding data domain service is provided to the user terminal by the target network, which not only ensures a service of a user in terms of a data domain service, but also saves air interface resources of a source network, and mitigates a resource shortage problem of the source network.

### Embodiment 3

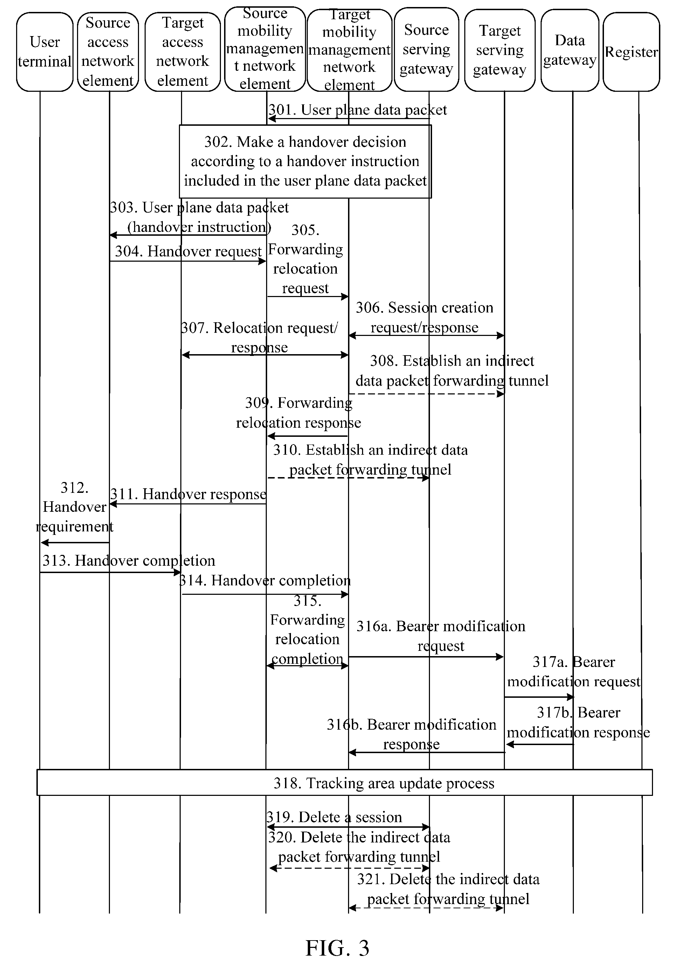

This embodiment of the present invention provides a method for processing a data domain service. As shown in FIG. 3, in another application scenario, a data domain service that needs to be handed over is handed over from an EPS network using a GERAN network as an access network to another EPS network using an E-UTRAN network as an access network, where the method may include the following steps:
301. A source mobility management network element receives a user-plane data packet that is of a user terminal and sent by a source serving gateway.

The user-plane data packet includes corresponding service type information, and the source mobility management network element learns a service type corresponding to the user-plane data packet by using the service type information.

The source mobility management network element may learn the service type corresponding to the user-plane data packet by using a service type indication carried in a GTP protocol header of the user-plane data packet, or a DSCP field carried in an IP header.

302. The source mobility management network element makes a handover decision according to a service type of the user-plane data packet and user terminal information, where the user terminal information includes a situation of covering the user terminal by a target network, and a capability of the user terminal to support the target network.

The source mobility management network element learns, according to system configuration information, the situation of covering the user terminal by the target network, and learns, according to radio access capability information the user terminal during initial access, the capability of the user terminal to support the target network. For example, the source mobility management network element learns, by using the system configuration information, whether there is an EPS network accessed by an E-UTRAN around, and learns, by using a radio access capability that the user terminal has during initial access, that the user terminal has a capability to support the EPS network accessed by the E-UTRAN.

Further, the source mobility management network element may also initiate, according to operator configuration information, a handover process for a specific user terminal, where the operator configuration information may be: a user agreeing to handover by signing a contract, a VIP user, and the like. The configuration information may be acquired from operation and maintenance network element or a parameter delivering network element.

303. The source mobility management network element forwards the user-plane data packet to a source access network element, and the source access network element initiates a handover process according to a handover instruction carried in the user-plane data packet.

The handover instruction is carried in the user-plane data packet forwarded by the source mobility management network element to the source access network element, where the handover instruction is obtained by the source mobility management network element by making the handover decision according to the service type of the user-plane data packet and the user terminal information.

The handover instruction includes an explicit instruction or an implicit instruction. The explicit instruction is used to instruct not to initiate handover, or instruct to initiate handover. Specifically, the handover instruction is carried in the user-plane data packet sent by the source mobility management network element to the source access network element, to instruct the source access network element not to initiate the handover process. A case in which the handover process is initiated is not limited, for example, no handover instruction is carried in the user-plane data packet, and the source access network element is instructed to initiate the handover process.

The handover instruction is carried in the user-plane data packet sent by the source mobility management network element to the source access network element, to instruct the source access network element to initiate the handover process. Cases in which the handover process is not initiated are not limited, and one case is: when the user-plane data packet received by the source access network element does not carry an instruction to initiate the handover process, the source access network element does not initiate the handover process. For example, in the handover instruction carried in the user-plane data packet, 1 is to instruct to initiate the handover process, then when the handover instruction received by the source access network element is 1, the handover process is initiated; and when no handover instruction is received or an instruction of another numeric value is received, the handover process is not initiated.

The handover instruction is carried in the user-plane data packet sent by the source mobility management network element to the source access network element, and two pieces of instruction information with different meanings may be configured to be used to respectively instruct the source access network element to initiate or not to initiate the handover process. For example, in the handover instruction carried in the user-plane data packet, a first bit being 1 is to instruct to indicate the handover process, and a second bit being 1 is to instruct not to initiate the handover process.

The source mobility management network element may determine, according to the system configuration information, the situation of covering the user terminal by the target network. Because an error may occur in user terminal information determined by the source mobility management network element, to ensure proper implementation of the handover process, optionally, the situation of covering the user terminal by the target network may be further checked by the source access network element. The source access network element determines, according to a measurement report sent by the user terminal, the situation of covering the user terminal by the target network.

To help a person skilled in the art understand a handover process of handing over a data domain service, which needs to be handed over, of a user terminal from a source network to a target network, the handover process is specifically described in the following steps 304 to 321. Specifically, an access network of the source network is a GERAN network, a corresponding source access network element is a BBS, and the source mobility management network element is an SGSN. An access network of the target network is an E-UTRAN network, a corresponding target access network element is an evolved NodeB (Evolved NodeB, eNodeB), a target mobility management network element is a mobility management entity (Mobility Management Entity, MME), a data gateway is a data gateway (Packet Data Network Gateway, PDN-GW). An HSS is responsible for management and maintenance of home user subscription information.

304. The source access network element sends a handover request message to the source mobility management network element, where the message carries information such as a node identifier of a target access network.

305. The source mobility management network element sends a forwarding relocation request message to a target mobility management network element, where the message carries information such as a user identifier and a user context.

306. The target mobility management network element determines whether the source serving gateway can continue to serve the user terminal, if the source serving gateway cannot continue to serve the user terminal, the target mobility management network element selects a target serving gateway, and establishes a new session with the target serving gateway.

307. The target mobility management network element sends a relocation request message to a target access network element, and the target access network element returns a relocation response message. This message interaction is used to forward, to the target access network element, radio bearer information and the like sent by the source access network element, so as to instruct the target access network element to establish a corresponding radio bearer.

308. For indirect forwarding, the target mobility management network element selects a serving gateway and establishes an indirect data packet forwarding tunnel.

309. The target mobility management network element returns a forwarding relocation response message to the source mobility management network element.

310. For indirect forwarding, the source mobility management network element selects a serving gateway and establishes an indirect data packet forwarding tunnel.

311. The source mobility management network element sends a handover response message to the source access network element, which indicates that corresponding preparations such as resource allocation are already completed on the target network.

312. The source access network element sends a handover requirement to the user terminal, where the handover requirement is used to instruct the user terminal to be handed over to the target network.

313. The user terminal sends a handover completion message to the target access network element.

314. The target access network element sends a handover completion message to the target mobility management network element.

315. The target mobility management network element sends a forwarding relocation completion message to the source mobility management network element, and the source mobility management network element returns a forwarding relocation acknowledgment message.

316a. The target mobility management network element sends a bearer modification request message to the target serving gateway.

317a. The target serving gateway forwards the bearer modification request message to a data gateway.

317b. The data gateway returns a bearer modification response message to the target serving gateway.

316b. The target serving gateway returns the bearer modification response message to the target mobility management network element.

318. The user terminal initiates a tracking area update process, where the process is used to: update registration information on an HSS, acquire subscription information of the user terminal, and reallocate a temporary user identity.

319. The source mobility management network element sends a session deletion request message to the source serving gateway, and the source serving gateway returns a session deletion response message.

320. The source mobility management network element deletes the indirect data packet forwarding tunnel.

321. The target mobility management network element deletes the indirect data packet forwarding tunnel.

It should be noted that, the handover process in this embodiment is a process in which a serving gateway changes. When the source serving gateway and the target serving gateway are a same serving gateway, a difference from the process lies in that: steps 306 and 308 are not executed, and step 317a and step 317b may not be executed.

The foregoing embodiment is described by using handover from an EPS GERAN network to an EPS E-UTRAN network as an example. This embodiment may also be applied to handover from a 2G GERAN network to a 3G UTRAN network, handover from a 2G GERAN network to an EPS UTRAN network, handover from a 2G GERAN network to an EPS E-UTRAN network, handover from an EPS GERAN network to a 3G UTRAN network, and handover from an EPS GERAN network to an EPS UTRAN network.

A handover process on networks that is different from handover from the EPS GERAN network to the EPS E-UTRAN network is basically the same as the handover process described in this embodiment, where a main difference lies in the following:
If the source network is a 2G network and the target network is a 3G network, the target access network element is a UTRAN, and the data gateway is a GGSN; there is no serving gateway between a source/target SGSN and the GGSN; steps related to the source/target serving gateway are all cancelled; and step 316 and step 317 are changed into: the target mobility management network element sends a PDP context updating request message to the data gateway, and the data gateway returns a corresponding response message.

If the source network is a 2G network, and the target network is an EPS network, the target access network element is a UTRAN/E-UTRAN, the target mobility management network element is an SGSN or an MME, and the data gateway is a node into which a PDN-GW and a GGSN are combined. There is no serving gateway between the source mobility management network element and the data gateway, and steps performed between the source mobility management network element and the source serving gateway are all cancelled.

If the source network is an EPS network, and the target network is a 3G network, the target access network element is a UTRAN, the target mobility management network element is an SGSN, the data gateway is a node into which a GGSN and a PDN-GW are combined, there is no serving gateway between the target mobility management network element and the data gateway, and all steps performed between the target mobility management network element and the target serving gateway are cancelled. Step 316 and step 317 are changed into: the target mobility management network element sends a PDP context updating request message to the data gateway, and the data gateway returns a corresponding response message.

It should be noted that, for specific description of some steps of the method for processing a data domain service provided by this embodiment of the present invention, reference may be made to corresponding content in Embodiments 1, 2, 4, and 5, and details are not repeatedly described herein in this embodiment of the present invention.

According to the method for processing a data domain service provided by the present invention, the source access network element sends the handover request to the source mobility management network element according to the handover instruction carried in the user-plane data packet, so that the data domain service, which needs to be handed over, of the user terminal is handed over to the target network. In the prior art, a data domain service occupies air interface resources and therefore, network congestion is caused; and compared with this, a data domain service of a user terminal is handed over to a target network, and a corresponding data domain service is provided to the user terminal by the target network, which not only ensures a service of a user in terms of a data domain service, but also saves air interface resources of a source network, and mitigates a resource shortage problem of the source network.

### Embodiment 4

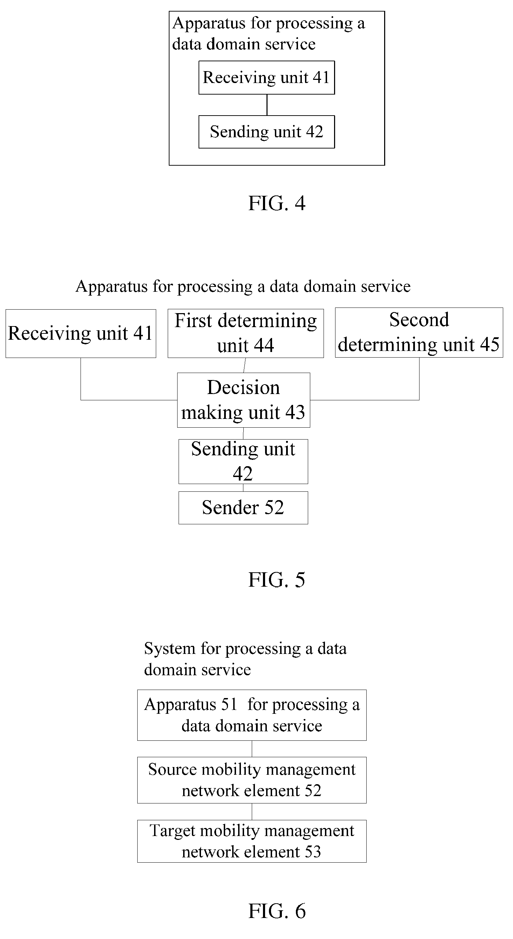

This embodiment of the present invention provides an apparatus for processing a data domain service. As shown in FIG. 4, the apparatus includes a receiving unit 41 and a sending unit 42.

The receiving unit 41 is configured to receive a user-plane data packet sent by a source mobility management network element, where the user-plane data packet includes a handover instruction or service type information.

The sending unit 42 is configured to send a handover request to the source mobility management network element according to the handover instruction or service type information received by the receiving unit 41, so as to hand over a data domain service of a user terminal to a target network.

Further, the handover instruction is obtained by the source mobility management network element by making a handover decision according to a service type of the user-plane data packet and user terminal information.

Further, the apparatus for processing a data domain service, as shown in FIG. 5, may further include a decision making unit 43.

The decision making unit 43 is configured to: before the sending unit 42 sends the handover request to the source mobility management network element, make the handover decision according to the service type of the user-plane data packet received by the receiving unit 41 and the user terminal information, where the user terminal information includes a situation of covering the user terminal by the target network and a capability of the user terminal to support the target network.

The sending unit 42 is further configured to: when the service type of the user-plane data packet is a data domain service that needs to be handed over, and the user terminal supports the target network and is within a coverage scope of the target network, send the handover request to the source mobility management network element, so as to hand over a data domain service, which needs to be handed over, of the user terminal to the target network.

Further, the data domain service that needs to be handed over is a preconfigured to-be-handed-over data domain service, and/or a data domain service determined according to a resource occupation situation of the data domain service.

Further, the apparatus for processing a data domain service may further include a first determining unit 44 and a second determining unit 45.

The first determining unit 44 is configured to: before the sending unit 42 sends the handover request to the source mobility management network element, determine, according to a measurement report sent by the user terminal, the situation of covering the user terminal by the target network.

The second determining unit 45 is configured to determine, according to radio access capability information of the user terminal during initial access, the capability of the user terminal to support the target network.

Further, the handover instruction includes an explicit instruction or an implicit instruction.

The explicit instruction is used to instruct not to initiate handover, or instruct to initiate handover.

Further, the decision making unit 43 is further configured to make the handover decision according to operator configuration information, the service type of the user-plane data packet received by the receiving unit 41, and the user terminal information determined by the first determining unit 44 and the second determining unit 45, where the operator configuration information is used to configure a specific to-be-handed-over user terminal.

The sending unit 42 is further configured to: when the service type of the user-plane data packet received by the receiving unit 41 is a data domain service that needs to be handed over, the user terminal supports the target network and is within the coverage scope of the target network, and the user terminal is a specific to-be-handed-over user terminal configured by an operator, hand over the data domain service, which needs to be handed over, of the user terminal to the target network.

This embodiment of the present invention further provides a system for processing a data domain service, as shown in FIG. 6, the system includes an apparatus 51 for determining a data domain service, a source mobility management network element 52, and a target mobility management network element 53.

The apparatus 51 for determining a data domain service is configured to: receive a user-plane data packet sent by the source mobility management network element 52, where the user-plane data packet includes a handover instruction or service type information; and send a handover request to the source mobility management network element 52 according to the handover instruction or the service type information, so as to hand over a data domain service of a user terminal to a target network.

The source mobility management network element 52 is configured to: send the user-plane data packet to the apparatus 51 for determining a data domain service; receive the handover request sent by the apparatus 51 for determining a data domain service; and forward the handover request to the target mobility management network element 53.

The target mobility management network element 53 is configured to: receive the handover request sent by the source mobility management network element 52, and start a subsequent handover process to hand over a data domain service, which needs to be handed over, of the user terminal to the target network.

It should be noted that, for specific description of some functional modules of the apparatus and system for processing a data domain service provided by this embodiment of the present invention, reference may be made to corresponding content in Embodiments 1, 2, 3, and 5, and details are not repeatedly described herein in this embodiment of the present invention.

According to the apparatus and system for processing a data domain service provided by the present invention, the handover request is sent to the source mobility management network element according to the handover instruction or the service type information included in the user-plane data packet, so that the data domain service of the user terminal is handed over to the target network. In the prior art, a data domain service occupies air interface resources and therefore, network congestion is caused; and compared with this, a data domain service of a user terminal is handed over to a target network, and a corresponding data domain service is provided to the user terminal by the target network, which not only ensures a service of a user in terms of a data domain service, but also saves air interface resources of a source network, and mitigates a resource shortage problem of the source network.

### Embodiment 5

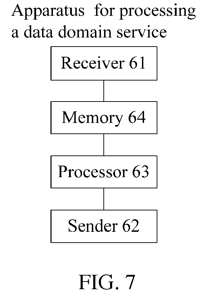

This embodiment of the present invention provides an apparatus for processing a data domain service. As shown in FIG. 7, the apparatus includes a receiver 61 and a sender 62.

The receiver 61 is configured to receive a user-plane data packet sent by a source mobility management network element, where the user-plane data packet includes a handover instruction or service type information.

The sender 62 is configured to send a handover request to the source mobility management network element according to the handover instruction or service type information received by the receiver 61, so as to hand over a data domain service of a user terminal to a target network.

Further, the handover instruction is obtained by the source mobility management network element by making a handover decision according to a service type of the user-plane data packet and user terminal information.

Further, the apparatus for processing a data domain service may further include a processor 63.

The processor 63 is configured to: before the sender 62 sends the handover request to the source mobility management network element, make the handover decision according to the service type of the user-plane data packet received by the receiver 61 and the user terminal information, where the user terminal information includes a situation of covering the user terminal by the target network and a capability of the user terminal to support the target network.

The sender 62 is further configured to: when the service type of the user-plane data packet is a data domain service that needs to be handed over, and the user terminal supports the target network and is within a coverage scope of the target network, send the handover request to the source mobility management network element, so as to hand over a data domain service, which needs to be handed over, of the user terminal to the target network.

Further, the data domain service that needs to be handed over is a preconfigured to-be-handed-over data domain service, and/or a data domain service determined according to a resource occupation situation of the data domain service.

Further, the receiver 61 is configured to: before the sender 62 sends the handover request to the source mobility management network element, receive a measurement report sent by the user terminal.

The processor 63 is further configured to determine, according to the measurement report received by the receiver 61, the situation of covering the user terminal by the target network.

The receiver 61 is further configured to receive radio access capability information of the user terminal during initial access.

The processor 63 is further configured to determine the capability of the user terminal to support the target network according to the radio access capability information received by the receiver 61.

Further, the handover instruction includes an explicit instruction or an implicit instruction.

The explicit instruction is used to instruct not to initiate handover, or instruct to initiate handover.

Further, the apparatus for processing a data domain service may further include a memory 64.

The memory 64 is configured to store preconfigured operator configuration information.

The processor 63 is further configured to make the handover decision according to the operator configuration information stored in the memory 64, the service type of the user-plane data packet received by the receiver 61 and the user terminal information, where the operator configuration information is used to configure a specific to-be-handed-over user terminal.

The sender 62 is further configured to: when the service type of the user-plane data packet received by the receiver 61 is a data domain service that needs to be handed over, the user terminal supports the target network and is within the coverage scope of the target network, and the user terminal is a specific to-be-handed-over user terminal configured by an operator, hand over the data domain service, which needs to be handed over, of the user terminal to the target network.

It should be noted that, for specific description of some functional modules of the apparatus for processing a data domain service provided by this embodiment of the present invention, reference may be made to corresponding content in Embodiments 1 to 4, and details are not repeatedly described herein in this embodiment of the present invention.

According to the apparatus for processing a data domain service provided by the present invention, the handover request is sent to the source mobility management network element according to the handover instruction or the service type information included in the user-plane data packet, so that the data domain service of the user terminal is handed over to the target network. In the prior art, a data domain service occupies air interface resources and therefore, network congestion is caused; and compared with this, a data domain service of a user terminal is handed over to a target network, and a corresponding data domain service is provided to the user terminal by the target network, which not only ensures a service of a user in terms of a data domain service, but also saves air interface resources of a source network, and mitigates a resource shortage problem of the source network.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk, or an optical disc of a computer, and includes several instructions for instructing a computer device (which may be a personal computer, a server, a network device, or the like) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for processing a data domain service, comprising:
receiving (101), by a source access network element, a user-plane data packet of a data domain service of a user terminal sent by a source mobility management network element, wherein the user-plane data packet comprises a handover instruction or service type information; and
sending (102) a handover request to the source mobility management network element according to the handover instruction or the service type information, so as to hand over the data domain service of the user terminal to a target network.

2. The method for processing a data domain service according to claim 1, wherein the handover instruction is obtained by the source mobility management network element by making a handover decision according to a service type of the user-plane data packet and user terminal information.

3. The method for processing a data domain service according to claim 2, wherein before the sending a handover request to the source mobility management network element, the method further comprises:
making the handover decision according to the service type of the user-plane data packet and the user terminal information, wherein the user terminal information comprises a situation of covering the user terminal by the target network and a capability of the user terminal to support the target network; and
if the service type of the user-plane data packet is a data domain service that needs to be handed over, and the user terminal supports the target network and is within a coverage scope of the target network, a result of the handover decision is sending the handover request to the source mobility management network element, so as to hand over a data domain service, which needs to be handed over, of the user terminal to the target network.

4. The method for processing a data domain service according to claim 3, wherein:
the data domain service that needs to be handed over is at least one of a preconfigured to-be-handed-over data domain service, and a data domain service determined according to a resource occupation situation of the data domain service.

5. The method for processing a data domain service according to any one of claims 3 to 4, wherein before the sending a handover request to the source mobility management network element, the method further comprises:
determining, according to a measurement report sent by the user terminal, the situation of covering the user terminal by the target network; and
determining, according to radio access capability information of the user terminal during initial access, the capability of the user terminal to support the target network.

6. The method for processing a data domain service according to claim 3, wherein the source mobility management network element determines, according to system configuration information, the situation of covering the user terminal by the target network.

7. The method for processing a data domain service according to any one of claims 2 to 6, wherein the handover instruction comprises an explicit instruction or an implicit instruction, wherein:
the explicit instruction is used to instruct not to initiate handover, or instruct to initiate handover.

8. The method for processing a data domain service according to any one of claims 2 to 7, wherein the making the handover decision according to the service type of the user-plane data packet and the user terminal information comprises:
making the handover decision according to operator configuration information, the service type of the user-plane data packet, and the user terminal information, wherein the operator configuration information is used to configure a specific to-be-handed-over user terminal; and
if the service type of the user-plane data packet is a data domain service that needs to be handed over, the user terminal supports the target network and is within the coverage scope of the target network, and the user terminal is a specific to-be-handed-over user terminal configured by an operator, handing over the data domain service, which needs to be handed over, of the user terminal to the target network.

9. A source access network apparatus for processing a data domain service, comprising:
a receiver (41), configured to receive a user-plane data packet of a data domain service of a user terminal sent by a source mobility management network element, wherein the user-plane data packet comprises a handover instruction or service type information; and
a sender (42), configured to send a handover request to the source mobility management network element according to the handover instruction or service type information received by the receiver (41), so as to hand over the data domain service of the user terminal to a target network.

10. The apparatus for processing a data domain service according to claim 9, wherein the handover instruction is obtained by the source mobility management network element by making a handover decision according to a service type of the user-plane data packet and user terminal information.

11. The apparatus for processing a data domain service according to claim 10, wherein the apparatus for processing a data domain service further comprises:
a processor, configured to: before the sender (42) sends the handover request to the source mobility management network element, make the handover decision according to the service type of the user-plane data packet received by the receiver (41) and the user terminal information, wherein the user terminal information comprises a situation of covering the user terminal by the target network and a capability of the user terminal to support the target network; and
the sender (42) is further configured to: when the service type of the user-plane data packet is a data domain service that needs to be handed over, and the user terminal supports the target network and is within a coverage scope of the target network, send the handover request to the source mobility management network element, so as to hand over a data domain service, which needs to be handed over, of the user terminal to the target network.

12. The apparatus for processing a data domain service according to claim 10 or 11, wherein:
the receiver (41) is further configured to: before the sender (42) sends the handover request to the source mobility management network element, receive a measurement report sent by the user terminal;
the processor is further configured to determine, according to the measurement report received by the receiver (41), the situation of covering the user terminal by the target network;
the receiver (41) is further configured to receive radio access capability information of the user terminal during initial access; and
the processor is further configured to determine, according to the radio access capability information received by the receiver (41), the capability of the user terminal to support the target network.

13. The apparatus for processing a data domain service according to any one of claims 10 to 12, wherein the handover instruction comprises an explicit instruction or an implicit instruction, wherein:
the explicit instruction is used to instruct not to initiate handover, or instruct to initiate handover.

14. The apparatus for processing a data domain service according to any one of claims 10 to 13, further comprising:
a memory, configured to store preconfigured operator configuration information, wherein:
the processor is further configured to make the handover decision according to the operator configuration information stored in the memory, the service type of the user-plane data packet received by the receiver (41), and the user terminal information, wherein the operator configuration information is used to configure a specific to-be-handed-over user terminal; and
the sender (42) is further configured to: when the service type of the user-plane data packet received by the receiver (41) is a data domain service that needs to be handed over, the user terminal supports the target network and is within the coverage scope of the target network, and the user terminal is a specific to-be-handed-over user terminal configured by an operator, hand over the data domain service, which needs to be handed over, of the user terminal to the target network.

15. A system for processing a data domain service, comprising:
the source access network apparatus for processing a data domain service (51) according to any one of claims 9 to 14, a source mobility management network element (52), and a target mobility management network element (53), wherein:
the source mobility management network element (52) is configured to: send a user-plane data packet of a data domain service of a user terminal comprising a handover instruction or service type information to the source access network apparatus for processing a data domain service (51), receive a handover request according to the handover instruction or service type information sent by the source access network apparatus for processing a data domain service (51), and forward the handover request to the target mobility management network element (53); and
the target mobility management network element (53) is configured to: receive the handover request sent by the source mobility management network element (52), and start a subsequent handover process to hand over the data domain service, which needs to be handed over, of the user terminal to a target network.

## Patentansprüche

1. Verfahren zur Verarbeitung eines Datendomaindienstes, das umfasst:
Empfangen (101), durch ein Quell-Zugangsnetzelement, eines Nutzerebenen-Datenpakets eines Datendomaindienstes eines Nutzerendgeräts, das von einem Quell-Mobilitätsmanagement-Netzelement gesendet wird, wobei das Nutzerebenen-Datenpaket eine Übergabeanweisung oder Diensttypinformationen umfasst; und
Senden (102) einer Übergabeanforderung an das Quell-Mobilitätsmanagement-Netzelement entsprechend der Übergabeanweisung oder den Diensttypinformationen,
um den Datendomaindienst des Nutzerendgeräts an ein Zielnetz zu übergeben.

2. Verfahren zur Verarbeitung eines Datendomaindienstes nach Anspruch 1, wobei die Übergabeanweisung von dem Quell-Mobilitätsmanagement-Netzelement durch Treffen einer Übergabeentscheidung entsprechend einem Diensttyp des Nutzerebenen-Datenpakets und den Nutzerendgerätinformationen erhalten wird.

3. Verfahren zur Verarbeitung eines Datendomaindienstes nach Anspruch 2, wobei vor dem Senden einer Übergabeanforderung an das Quell-Mobilitätsmanagement-Netzelement das Verfahren ferner umfasst:
Treffen der Übergabeentscheidung entsprechend dem Diensttyp des Nutzerebenen-Datenpakets und den Nutzerendgerätinformationen, wobei die Nutzerendgerätinformationen eine Situation des Erfassens des Nutzerendgeräts durch das Zielnetz und eine Fähigkeit des Nutzerendgeräts zum Unterstützen des Zielnetzes umfassen; und
wenn der Diensttyp des Nutzerebenen-Datenpakets ein Datendomaindienst ist, der übergeben werden muss, und das Nutzerendgerät das Zielnetz unterstützt und innerhalb eines Erfassungsbereichs des Zielnetzes liegt, sendet ein Ergebnis der Übergabeentscheidung die Übergabeanforderung an das Quell-Mobilitätsmanagement-Netzelement, um einen Datendomaindienst, der übergeben werden muss, des Nutzerendgeräts an das Zielnetz zu übergeben.

4. Verfahren zur Verarbeitung eines Datendomaindienstes nach Anspruch 3, wobei:
der Datendomaindienst, der übergeben werden muss, zumindest einer eines vorkonfigurierten zu übergebenden Datendomaindienstes und eines Datendomaindienstes ist, der entsprechend einer Ressourcenbelegungssituation des Datendomaindienstes bestimmt wird.

5. Verfahren zur Verarbeitung eines Datendomaindienstes nach einem der Ansprüche 3 bis 4, wobei vor dem Senden einer Übergabeanforderung an das Quell-Mobilitätsmanagement-Netzelement das Verfahren ferner umfasst:
Bestimmen entsprechend einem Messprotokoll, das von dem Nutzerendgerät gesendet wird, der Situation des Erfassens des Nutzerendgeräts durch das Zielnetz;
und
Bestimmen, entsprechend Funkzugangsfähigkeitsinformationen des Nutzerendgeräts bei anfänglichem Zugang, der Fähigkeit des Nutzerendgeräts zum Unterstützen des Zielnetzes.

6. Verfahren zur Verarbeitung eines Datendomaindienstes nach Anspruch 3, wobei das Quell-Mobilitätsmanagement-Netzelement entsprechend den Systemkonfigurationsinformationen die Situation des Erfassens des Nutzerendgeräts durch das Zielnetz bestimmt.

7. Verfahren zur Verarbeitung eines Datendomaindienstes nach einem der Ansprüche 2 bis 6, wobei die Übergabeanweisung eine explizite Anweisung oder eine implizite Anweisung umfasst, wobei:
die explizite Anweisung zum Anweisen, keine Übergabe zu initiieren, oder zum Anweisen, eine Übergabe zu initiieren, verwendet wird.

8. Verfahren zur Verarbeitung eines Datendomaindienstes nach einem der Ansprüche 2 bis 7, wobei das Treffen der Übergabeentscheidung entsprechend dem Diensttyp des Nutzerebenen-Datenpakets und den Nutzerendgerätinformationen umfasst:
Treffen der Übergabeentscheidung entsprechend Operatorkonfigurationsinformationen, dem Diensttyp des Nutzerebenen-Datenpakets und den Nutzerendgerätinformationen, wobei die Operatorkonfigurationsinformationen zum Konfigurieren eines spezifischen zu übergebenden Nutzerendgeräts verwendet werden; und
wenn der Diensttyp des Nutzerebenen-Datenpakets ein Datendomaindienst ist, der übergeben werden muss, das Nutzerendgerät das Zielnetz unterstützt und innerhalb des Erfassungsbereichs des Zielnetzes liegt und das Nutzerendgerät ein spezifisches zu übergebendes Nutzerendgerät ist, das von einem Operator konfiguriert wird, Übergabe des Datendomaindienstes, welcher übergeben werden muss, des Nutzerendgeräts an das Zielnetz.

9. Quell-Zugangsnetzvorrichtung zur Verarbeitung eines Datendomaindienstes, die umfasst:
einen Empfänger (41), der so ausgeführt ist, dass er ein Nutzerebenen-Datenpaket eines Datendomaindienstes eines Nutzerendgeräts, das von einem Quell-Mobilitätsmanagement-Netzelement gesendet wird, empfängt, wobei das Nutzerebenen-Datenpaket eine Übergabeanweisung oder Diensttypinformationen umfasst; und
einen Sender (42), der so ausgeführt ist, dass er entsprechend der Übergabeanweisung oder den Diensttypinformationen, die von dem Empfänger (41) empfangen werden, eine Übergabeanforderung an das Quell-Mobilitätsmanagement-Netzelement sendet, um den Datendomaindienst des Nutzerendgeräts an ein Zielnetz zu übergeben.

10. Vorrichtung zur Verarbeitung eines Datendomaindienstes nach Anspruch 9, wobei die Übergabeanweisung von dem Quell-Mobilitätsmanagement-Netzelement durch Treffen einer Übergabeentscheidung entsprechend einem Diensttyp des Nutzerebenen-Datenpakets und den Nutzerendgerätinformationen erhalten wird.

11. Vorrichtung zur Verarbeitung eines Datendomaindienstes nach Anspruch 10, wobei die Vorrichtung zur Verarbeitung eines Datendomaindienstes ferner umfasst:
einen Prozessor, der so ausgeführt ist, dass er: bevor der Sender (42) die Übergabeanforderung an das Quell-Mobilitätsmanagement-Netzelement sendet, die Übergabeentscheidung entsprechend dem Diensttyp des Nutzerebenen-Datenpakets, das von dem Empfänger (41) empfangen wird, und den Nutzerendgerätinformationen trifft, wobei die Nutzerendgerätinformationen eine Situation des Erfassens des Nutzerendgeräts durch das Zielnetz und eine Fähigkeit des Nutzerendgeräts zum Unterstützen des Zielnetzes umfassen; und
der Sender (42) ferner so ausgeführt ist, dass er: wenn der Diensttyp des Nutzerebenen-Datenpakets ein Datendomaindienst ist, der übergeben werden muss, und das Nutzerendgerät das Zielnetz unterstützt und innerhalb eines Erfassungsbereichs des Zielnetzes liegt, die Übergabeanforderung an das Quell-Mobilitätsmanagement-Netzelement sendet, um einen Datendomaindienst, der übergeben werden muss, des Nutzerendgeräts an das Zielnetz zu übergeben.

12. Vorrichtung zur Verarbeitung eines Datendomaindienstes nach Anspruch 10 oder 11, wobei:
der Empfänger (41) ferner so ausgeführt ist, dass er: bevor der Sender (42) die Übergabeanforderung an das Quell-Mobilitätsmanagement-Netzelement sendet, ein Messprotokoll, das von dem Nutzerendgerät gesendet wird, empfängt;
der Prozessor ferner so ausgeführt ist, dass er entsprechend dem Messprotokoll, das von dem Empfänger (41) empfangen wird, die Situation des Erfassens des Nutzerendgeräts durch das Zielnetz bestimmt;
der Empfänger (41) ferner so ausgeführt ist, dass er Funkzugangsfähigkeitsinformationen des Nutzerendgeräts beim anfänglichen Zugang empfängt; und
der Prozessor ferner so ausgeführt ist, dass er entsprechend den Funkzugangsfähigkeitsinformationen, die von dem Empfänger (41) empfangen werden, die Fähigkeit des Nutzerendgeräts zum Unterstützen des Zielnetzes bestimmt.

13. Vorrichtung zur Verarbeitung eines Datendomaindienstes nach einem der Ansprüche 10 bis 12, wobei die Übergabeanweisung eine explizite Anweisung und eine implizite Anweisung umfasst, wobei:
die explizite Anweisung zum Anweisen, keine Übergabe zu initiieren, oder zum Anweisen, eine Übergabe zu initiieren, verwendet wird.

14. Vorrichtung zur Verarbeitung eines Datendomaindienstes nach einem der Ansprüche 10 bis 13, die ferner umfasst:
einen Speicher, der so ausgeführt ist, dass er vorkonfigurierte Operatorkonfigurationsinformationen speichert, wobei:
der Prozessor ferner so ausgeführt ist, dass er die Übergabeentscheidung entsprechend den Operatorkonfigurationsinformationen, die in dem Speicher gespeichert sind, dem Diensttyp des Nutzerebenen-Datenpakets, das von dem Empfänger (41) empfangen wird, und den Nutzerendgerätinformationen trifft, wobei die Operatorkonfigurationsinformationen zum Konfigurieren eines spezifischen zu übergebenden Nutzerendgeräts verwendet werden; und
der Sender (42) ferner so ausgeführt ist, dass er: wenn der Diensttyp des Nutzerebenen-Datenpakets, das von dem Empfänger (41) empfangen wird, ein Datendomaindienst ist, der übergeben werden muss, das Nutzerendgerät das Zielnetz unterstützt und innerhalb des Erfassungsbereichs des Zielnetzes liegt und das Nutzerendgerät ein spezifisches zu übergebendes Nutzerendgerät ist, das von einem Operator konfiguriert wird, den Datendomaintyp, der übergeben werden muss, des Nutzerendgeräts an das Zielnetz übergibt.

15. System zur Verarbeitung eines Datendomaindienstes, das umfasst:
die Quell-Zugangsnetzvorrichtung zur Verarbeitung eines Datendomaindienstes (51) nach einem der Ansprüche 9 bis 14, ein Quell-Mobilitätsmanagement-Netzelement (52) und ein Ziel-Mobilitätsmanagement-Netzelement (53), wobei:
das Quell-Mobilitätsmanagement-Netzelement (52) so ausgeführt ist, dass es: ein Nutzerebenen-Datenpaket eines Datendomaindienstes eines Nutzerendgeräts, das eine Übergabeanweisung oder Diensttypinformationen umfasst, an die Quell-Zugangsnetzvorrichtung zur Verarbeitung eines Datendomaindienstes (51) sendet, eine Übergabeanforderung entsprechend der Übergabeanweisung oder den Diensttypinformationen, die von der Quell-Zugangsnetzvorrichtung zur Verarbeitung eines Datendomaindienstes (51) gesendet werden, empfängt und die Übergabeanforderung an das Ziel-Mobilitätsmanagement-Netzelement (53) weiterleitet; und
das Ziel-Mobilitätsmanagement-Netzelement (53) so ausgeführt ist, dass es: die Übergabeanforderung, die von dem Ziel-Mobilitätsmanagement-Netzelement (52) gesendet wird, empfängt und einen anschließenden Übergabeprozess zum Übergeben des Datendomaindienstes, der übergeben werden muss, des Nutzerendgeräts an ein Zielnetz startet.

## Revendications

1. Procédé de traitement de service de domaine de données, consistant à :
- recevoir (101), avec un élément réseau d'accès source, un paquet de données de plan d'utilisateur d'un service de domaine de données d'un terminal d'utilisateur envoyé par un élément réseau de gestion de mobilité source, lequel paquet de données de plan d'utilisateur comprend une instruction de transfert ou des informations de type de service ; et
- envoyer (102) une demande de transfert à l'élément réseau de gestion de mobilité source en fonction de l'instruction de transfert ou des informations de type de service de manière à transférer le service de domaine de données du terminal d'utilisateur vers un réseau cible.

2. Procédé de traitement de service de domaine de données selon la revendication 1, dans lequel l'instruction de transfert est obtenue par l'élément réseau de gestion de mobilité source en prenant une décision de transfert en fonction d'un type de service du paquet de données de plan d'utilisateur et d'informations de terminal d'utilisateur.

3. Procédé de traitement de service de domaine de données selon la revendication 2, dans lequel avant d'envoyer une demande de transfert à l'élément réseau de gestion de mobilité source, le procédé consiste en outre à :
- prendre la décision de transfert en fonction du type de service du paquet de données de plan d'utilisateur et des informations de terminal d'utilisateur, les informations de terminal d'utilisateur comprenant une situation de couverture du terminal d'utilisateur par le réseau cible et une capacité du terminal d'utilisateur à supporter le réseau cible ; et
- si le type de service du paquet de données de plan d'utilisateur est un service de domaine de données qui doit être transféré, et que le terminal d'utilisateur supporte le réseau cible et est dans une plage de couverture du réseau cible, un résultat de la décision de transfert est d'envoyer la demande de transfert à l'élément réseau de gestion de mobilité source de manière à transférer un service de domaine de données, qui doit être transféré, du terminal d'utilisateur vers le réseau cible.

4. Procédé de traitement de service de domaine de données selon la revendication 3, dans lequel le service de domaine de données qui doit être transféré est l'un au moins d'un service de domaine de données devant être transféré préconfiguré et d'un service de domaine de données déterminé en fonction d'une situation d'occupation de ressources du service de domaine de données.

5. Procédé de traitement de service de domaine de données selon l'une quelconque des revendications 3 à 4, dans lequel avant d'envoyer une demande de transfert à l'élément réseau de gestion de mobilité source, le procédé consiste en outre à :
- déterminer en fonction d'un rapport de mesure envoyé par le terminal d'utilisateur la situation de couverture du terminal d'utilisateur par le réseau cible ; et
- déterminer, en fonction d'informations de capacité d'accès radio du terminal d'utilisateur pendant l'accès initial, la capacité du terminal d'utilisateur à supporter le réseau cible.

6. Procédé de traitement de service de domaine de données selon la revendication 3, dans lequel l'élément réseau de gestion de mobilité source détermine en fonction d'informations de configuration du système la situation de couverture du terminal d'utilisateur par le réseau cible.

7. Procédé de traitement de service de domaine de données selon l'une quelconque des revendications 2 à 6, dans lequel l'instruction de transfert comprend une instruction explicite ou une instruction implicite, et dans lequel l'instruction explicite est utilisée pour ordonner de ne pas lancer le transfert ou ordonner de lancer le transfert.

8. Procédé de traitement de service de domaine de données selon l'une quelconque des revendications 2 à 7, dans lequel la prise de décision de transfert en fonction du type de service du paquet de données de plan d'utilisateur et des informations de terminal d'utilisateur consiste à :
- prendre la décision de transfert en fonction d'informations de configuration d'opérateur, du type de service du paquet de données de plan d'utilisateur et des informations de terminal d'utilisateur, les informations de configuration d'opérateur étant utilisées pour configurer un terminal d'utilisateur devant être transféré spécifique ; et
- si le type de service du paquet de données de plan d'utilisateur est un service de domaine de données qui doit être transféré, le terminal d'utilisateur supporte le réseau cible et est dans la plage de couverture du réseau cible, et le terminal d'utilisateur est un terminal d'utilisateur devant être transféré spécifique configuré par un opérateur, transférer le service de domaine de données, qui doit être transféré, du terminal d'utilisateur vers le réseau cible.

9. Appareil de réseau d'accès source pour traiter un service de domaine de données, comprenant :
- un récepteur (41) conçu pour recevoir un paquet de données de plan d'utilisateur d'un service de domaine de données d'un terminal d'utilisateur envoyé par un élément réseau de gestion de mobilité source, lequel paquet de données de plan d'utilisateur comprend une instruction de transfert ou des informations de type de service ; et
- un émetteur (42) conçu pour envoyer une demande de transfert à l'élément réseau de gestion de mobilité source en fonction de l'instruction de transfert ou des informations de type de service reçues par le récepteur (41) de manière à transférer le service de domaine de données du terminal d'utilisateur vers un réseau cible.

10. Appareil pour traiter un service de domaine de données selon la revendication 9, dans lequel l'instruction de transfert est obtenue par l'élément réseau de gestion de mobilité source en prenant une décision de transfert en fonction d'un type de service du paquet de données de plan d'utilisateur et d'informations de terminal d'utilisateur.

11. Appareil pour traiter un service de domaine de données selon la revendication 10, lequel appareil pour traiter un service de domaine de données comprend en outre:
- un processeur conçu pour : avant que l'émetteur (42) envoie la demande de transfert à l'élément réseau de gestion de mobilité source, prendre la décision de transfert en fonction du type de service du paquet de données de plan d'utilisateur reçu par le récepteur (41) et des informations de terminal d'utilisateur, les informations de terminal d'utilisateur comprenant une situation de couverture du terminal d'utilisateur par le réseau cible et une capacité du terminal d'utilisateur à supporter le réseau cible ; et
- l'émetteur (42) est en outre conçu pour : lorsque le type de service du paquet de données de plan d'utilisateur est un service de domaine de données qui doit être transféré, et que le terminal d'utilisateur supporte le réseau cible et est dans une plage de couverture du réseau cible, envoyer la demande de transfert à l'élément réseau de gestion de mobilité source de manière à transférer un service de domaine de données, qui doit être transféré, du terminal d'utilisateur vers le réseau cible.

12. Appareil pour traiter un service de domaine de données selon la revendication 10 ou 11, dans lequel :
- le récepteur (41) est en outre conçu pour : avant que l'émetteur (42) envoie la demande de transfert à l'élément réseau de gestion de mobilité source, recevoir un rapport de mesure envoyé par le terminal d'utilisateur ;
- le processeur est en outre conçu pour déterminer, en fonction du rapport de mesure reçu par le récepteur (41) la situation de couverture du terminal d'utilisateur par le réseau cible ;
- le récepteur (41) est en outre conçu pour recevoir des informations de capacité d'accès radio du terminal d'utilisateur pendant l'accès initial ; et
- le processeur est en outre conçu pour déterminer, en fonction des informations de capacité d'accès radio reçues par le récepteur (41), la capacité du terminal d'utilisateur à supporter le réseau cible.

13. Appareil pour traiter un service de domaine de données selon l'une quelconque des revendications 10 à 12, dans lequel l'instruction de transfert comprend une instruction explicite ou une instruction implicite, et dans lequel l'instruction explicite est utilisée pour ordonner de ne pas lancer le transfert ou ordonner de lancer le transfert.

14. Appareil pour traiter un service de domaine de données selon l'une quelconque des revendications 10 à 13, comprenant en outre :
- une mémoire conçue pour stocker des informations de configuration d'opérateur préconfigurées ; dans lequel
- le processeur est en outre conçu pour prendre la décision de transfert en fonction des informations de configuration d'opérateur stockées dans la mémoire, du type de service du paquet de données de plan d'utilisateur reçu par le récepteur (41) et des informations de terminal d'utilisateur, les informations de configuration d'opérateur étant utilisées pour configurer un terminal d'utilisateur devant être transféré spécifique ; et
- l'émetteur (42) est en outre conçu pour : lorsque le type de service du paquet de données de plan d'utilisateur reçu par le récepteur (41) est un service de domaine de données qui doit être transféré, le terminal d'utilisateur supporte le réseau cible et est dans la plage de couverture du réseau cible, et le terminal d'utilisateur est un terminal d'utilisateur devant être transféré spécifique configuré par un opérateur, transférer le service de domaine de données, qui doit être transféré, du terminal d'utilisateur vers le réseau cible.

15. Système de traitement de service de domaine de données, comprenant :
- l'appareil de réseau d'accès source pour traiter un service de domaine de données (S1) selon l'une quelconque des revendications 9 à 14, un élément réseau de gestion de mobilité source (52), et un élément réseau de gestion de mobilité cible (53), dans lequel :
- l'élément réseau de gestion de mobilité source (52) est conçu pour : envoyer un paquet de données de plan d'utilisateur d'un service de domaine de données d'un terminal d'utilisateur comprenant une instruction de transfert ou des informations de type de service à l'appareil de réseau d'accès source pour traiter un service de domine- de données (51), recevoir une demande de transfert en fonction de l'instruction de transfert ou des informations de type de service envoyées par l'appareil de réseau d'accès source pour traiter un service de domaine de données (51), et envoyer la demande de transfert à l'élément réseau de gestion de mobilité cible (53) ; et
- l'élément réseau de gestion de mobilité cible (53) est conçu pour : recevoir la demande de transfert envoyée par l'élément réseau de gestion de mobilité source (52), et démarrer un processus de transfert suivant afin de transférer le service de domaine de données, qui doit être transféré, du terminal d'utilisateur vers un réseau cible.
